# EUROPEAN PATENT APPLICATION

(11) **EP 4 786 756 A1**
(43) Date of publication of application: **05.08.2026**
(21) Application number: 26153730.2
(22) Date of filing: 23.01.2026
(51) Int. Cl.: F01L 1/02, F01L 1/047, F01L 1/053

(54) **ENGINE COMPRISING A CAMSHAFT TIMING GEAR**

(30) Priority: 27.01.2025 US 202563750151 P
(71) Applicant: Lombardini S.r.l., 42124 Reggio Emilia (IT)
(72) Inventor: FORNACIARI, Riccardo, REGGIO EMILIA (IT); BONANNI, Massimiliano, REGGIO EMILIA (IT)
(74) Representative: Rausa, Mario Alberto Manlio

(57) **Abstract**

A camshaft timing gear useable with different camshafts is disclosed. The camshaft timing gear is mountable to a first camshaft of a first engine type in a first orientation and to a second camshaft of a second engine type in a second, or reversed, orientation.

## Description

### CROSS-REFERENCE TO RELATED APPLICATION

This application claims priority to U.S. Provisional Patent Application No. 63/750,151, entitled ENGINE COMPRISIG A CAMSHAFT TIMING GEAR, which was filed on January 27, 2025, the entire disclosure of which is incorporated by reference herein.

### BACKGROUND

Many engine manufacturers manufacture and sell several engine types and/or models. For instance, an engine manufacturer may manufacture and sell three-cylinder engines as well as four-cylinder engines. In many instances, the components used to assemble the three-cylinder engines cannot be used to assemble the four-cylinder engines, and vice versa. In such instances, separate and independent inventories of components may need to be maintained to manufacture the different engine types. An improvement over the foregoing is disclosed herein.

### BRIEF DESCRIPTION OF THE DRAWINGS

Exemplary embodiments are described herein with reference to the following drawings.
FIG. 1 is a partial perspective view of an engine comprising an engine block, a crankshaft including a crankshaft timing gear, and a camshaft including a camshaft timing gear operably engaged with the crankshaft timing gear;
FIG. 2 is a perspective view of a camshaft timing gear hub including a first side and a second side;
FIG. 3 is an elevational view of the camshaft timing gear hub of FIG. 2;
FIG. 4 is a perspective view of a camshaft timing gear including the timing gear hub of FIG. 2 and a timing flange attached to the first side of the timing gear hub;
FIG. 5 is an elevational view of the camshaft timing gear of FIG. 4;
FIG. 6 is a side elevational view of the camshaft timing gear of FIG. 4;
FIG. 7 is a perspective view of the timing flange of FIG. 4;
FIG. 8 is an elevational view of the timing flange of FIG. 4;
FIG. 9 is a side elevational view of the timing flange of FIG. 4;
FIG. 10 is a perspective view of another timing flange;
FIG. 11 is an elevational view of the timing flange of FIG. 10;
FIG. 12 is a side elevational view of the timing flange of FIG. 10;
FIG. 13 is a perspective view of a camshaft timing gear including the timing flange of FIG. 10 attached to the camshaft timing gear hub of FIG. 2;
FIG. 14 is an elevational view of the camshaft timing gear of FIG. 13;
FIG. 15 is a side elevational view of the camshaft timing gear of FIG. 13;
FIG. 16 is a perspective view of a first side of a camshaft timing gear;
FIG. 17 is a perspective view of a second side of the camshaft timing gear of FIG. 16;
FIG. 18 is an elevational view of the camshaft timing gear of FIG. 16 attached to a camshaft;
FIG. 19 is a partial side elevational view of camshaft timing gear of FIG. 16 attached to the camshaft of FIG. 18;
FIG. 20 is a perspective view of the camshaft timing gear of FIG. 16 attached to the camshaft of FIG. 18;
FIG. 21 is another perspective view of the camshaft timing gear of FIG. 16 attached to the camshaft of FIG. 18;
FIG. 22 is a perspective view of the camshaft timing gear of FIG. 16 attached to a different camshaft;
FIG. 23 is a cross-sectional view of the camshaft timing gear of FIG. 16 and the camshaft of FIG. 22;
FIG. 24 is a perspective view of the camshaft of FIG. 22;
FIG. 25 is an end view of the camshaft of FIG. 22;
FIG. 26 is a perspective view of a camshaft timing gear; and
FIG. 27 is another perspective view of the camshaft timing gear of FIG. 26.

### DETAILED DESCRIPTION

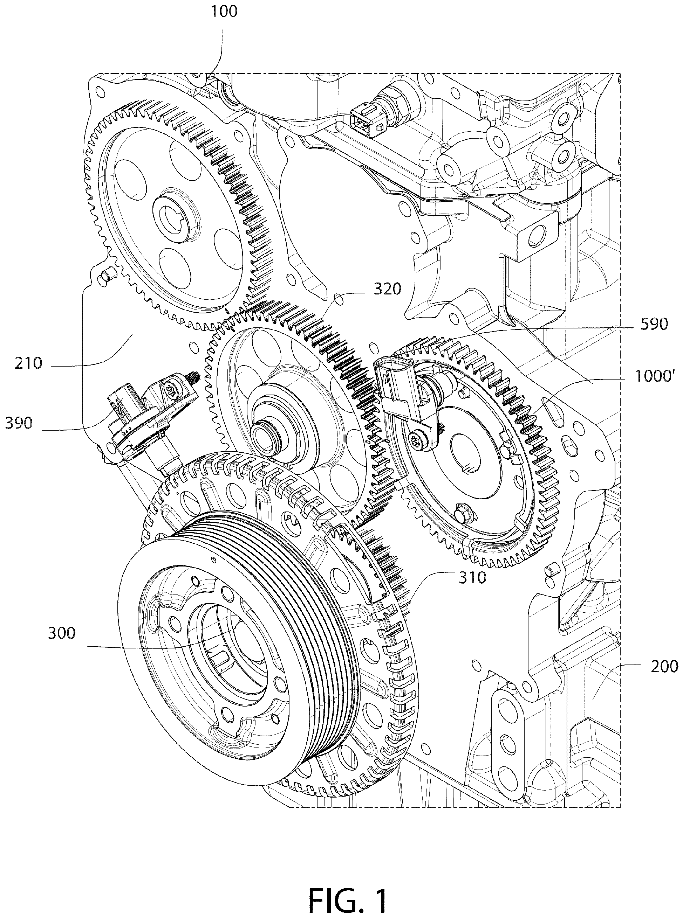

An engine 100 is illustrated in FIG. 1. The engine 100 comprises an engine block 200 comprising a plurality of cylinders defined therein. In at least one embodiment, the engine block 200 comprises three cylinders while, in other embodiments, the engine block comprises four cylinders, for example. That said, the engine block 200 can comprise any suitable number of cylinders such as one cylinder, two cylinders, or five or more cylinders. The engine 100 further comprises a piston in each cylinder that is engaged with a crankshaft 300 rotatably supported by the engine block 200. Each cylinder comprises an open end opposite the piston positioned therein and the engine 100 further comprises a cylinder head that covers the open ends of the cylinders. The cylinder head comprises inlet ports and outlet ports defined therein that, respectively, allow air to flow into and exhaust to exit from the cylinders. The engine 100 further comprises a valve train including valves configured to open and close the ports defined in the cylinder head. Moreover, the engine 100 further comprises a fuel delivery system configured to deliver fuel to the cylinders.

In various embodiments, the fuel delivery system entrains fuel into the air before it enters the cylinders. In at least one such embodiment, the fuel delivery system comprises a carburetor, for example. In certain embodiments, the fuel delivery system comprises fuel injectors that directly inject fuel into the cylinders. In either case, the engine 100 can further include a fuel ignition system. In various embodiments, the fuel ignition system comprises at least one spark plug at least partially positioned in each cylinder that creates a spark to ignite the fuel in the cylinder. Such embodiments are typical for engines that use gasoline as a fuel, for example. That said, any suitable fuel can be used. In certain embodiments, a fuel ignition system is not required for the fuel to combust in the cylinders. In such embodiments, compression of the fuel within the cylinders alone is sufficient to combust the fuel. In any event, the engine 100 can further comprise a valve cover that extends over the valve train and/or an exhaust manifold that controls the flow of exhaust exiting the cylinders. Moreover, as discussed in greater detail below, the engine 100 further comprises a camshaft that controls the operation of the valve train and the opening and closing of the cylinder ports.

As described above, the engine block 200 of the engine 100 rotatably supports the crankshaft 300. The pistons of the engine 100 are engaged with the crankshaft 300 such that the sequential combustion of the fuel in the cylinders sequentially drives the pistons toward the crankshaft 300 which drives the crankshaft 300 about an axis of rotation. The crankshaft 300 comprises a timing gear 310 mounted thereto that rotates with the crankshaft 300. The timing gear 310 is meshingly engaged with an idler timing gear 320 rotatably mounted to a front engine plate 210 mounted to the engine block 200. The idler timing gear 320 is also meshingly engaged with a camshaft timing gear 1000' mounted to the camshaft. The camshaft timing gear 1000' is mounted to the camshaft such that the camshaft rotates with the camshaft timing gear 1000' and, as a result, the camshaft is rotated by the crankshaft 300 via the idler timing gear 320. The valve train of the engine 100 is driven by the camshaft such that the opening and closing of the cylinder inlet and outlet ports is properly timed with the intake-combustion-exhaust cycle of the air and fuel in the cylinders. Moreover, further to the below, the diameter of the timing gears 310, 320 and the camshaft timing gear are selected so as to provide the desired timing between valve train and the fuel ignition.

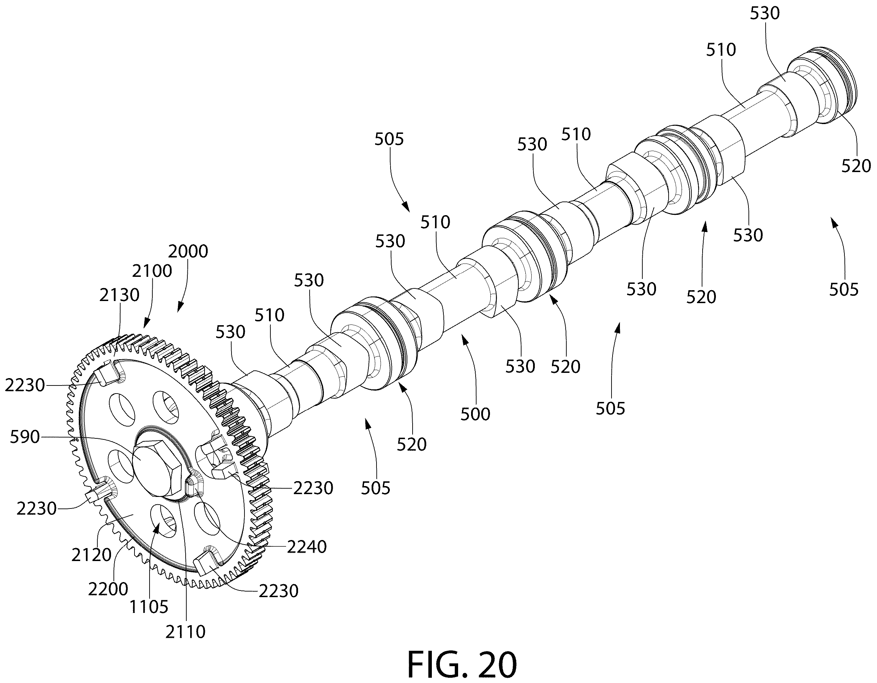

A camshaft 500 is illustrated in FIG. 20. The camshaft 500 comprises a central shaft 510 and bearing supports 520 positioned along the central shaft 510 that rotatably support the camshaft 500 in an engine. The camshaft 500 comprises four cylinder control regions 505, with each cylinder control region 505 configured to control the intake and exhaust valves of a cylinder in the engine.

Each cylinder control region 505 comprises two cam lobes 530 - one cam lobe 530 to control an intake valve and one cam lobe 530 to control an exhaust valve. That said, other embodiments are envisioned in which an engine has more than one intake valve and/or more than one exhaust valve to control the intake-combustion-exhaust cycle of a cylinder. In such embodiments, the camshaft has a suitable number of cam lobes that control the intake and exhaust valves of the engine. Moreover, other embodiments are envisioned in which an engine has more than one camshaft to control the intake and exhaust valves of the engine.

Further to the above, the engine 100 further comprises an engine control unit (ECU), or computer, configured to control the fuel injection timing, the fuel ignition timing, and/or other fuel supply, injection, and timing parameters of the engine 100. To this end, the engine 100 further comprises a crankshaft sensor 390 and a camshaft sensor 590. The crankshaft sensor 390 is configured to detect, and with the assistance of the ECU to determine, the speed of the crankshaft 300, the instantaneous position of the crankshaft 300, and the position of each piston in its respective cylinder. The crankshaft sensor 390 is configured to emit a signal to the engine control unit that reveals the rotational speed and position of the crankshaft 300. In at least one embodiment, the crankshaft sensor 390 is configured to generate a pulsed voltage potential at an electrical contact that is connected to the engine control unit via one or more wires, for example, that corresponds to the rotational speed and position of the crankshaft 300. In at least one such embodiment, the crankshaft sensor 390 emits a high voltage potential every time a tooth on the crankshaft 300, or a tooth on a gear mounted to the crankshaft 300, for example, passes by the crankshaft sensor 390 that can be detected by the engine control unit via the electrical wire. For faster rotational speeds of the crankshaft 300, the voltage pulses emitted by the crankshaft sensor 390 will be faster whereas, for slower rotational speeds of the crankshaft 300, the voltage pulses emitted by the crankshaft sensor 390 will be slower.

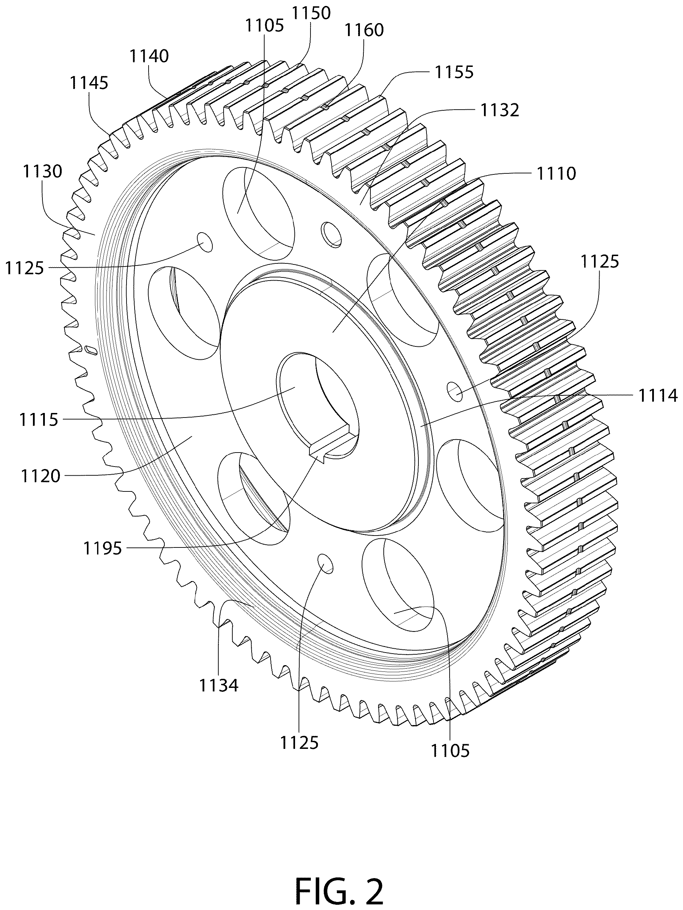

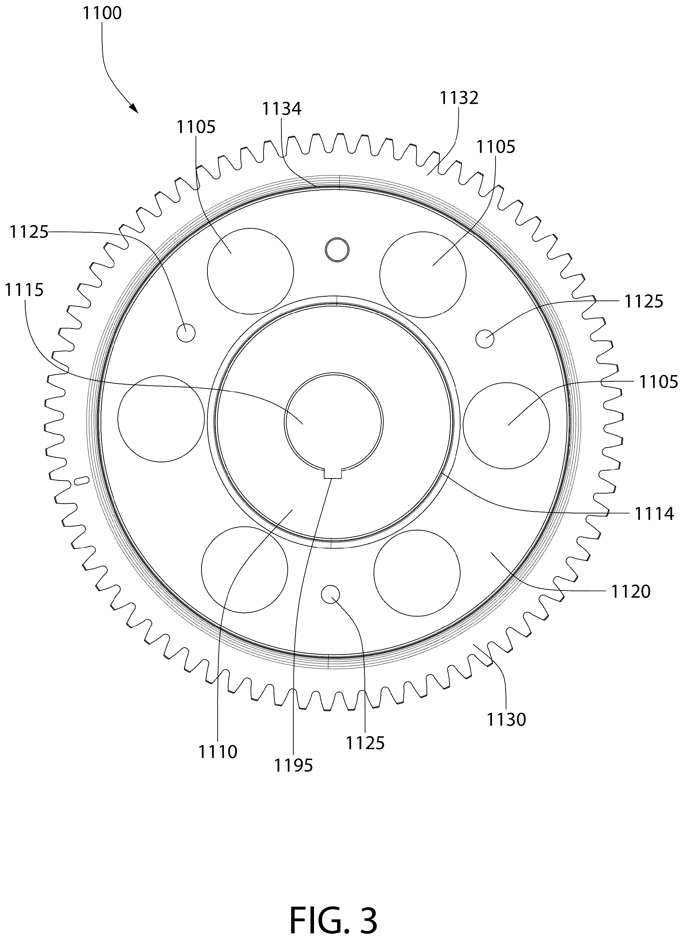

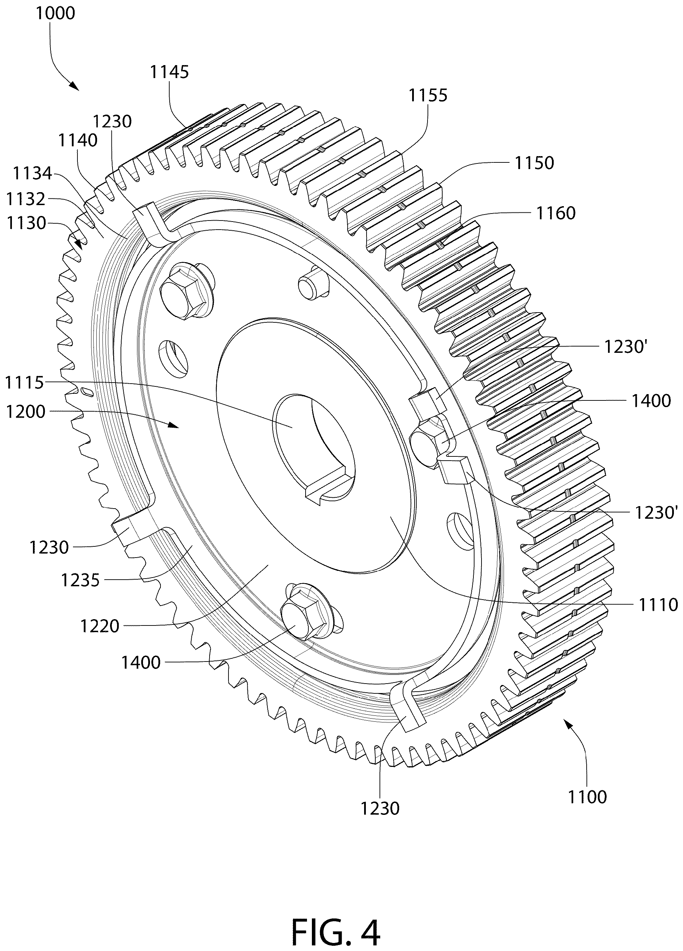

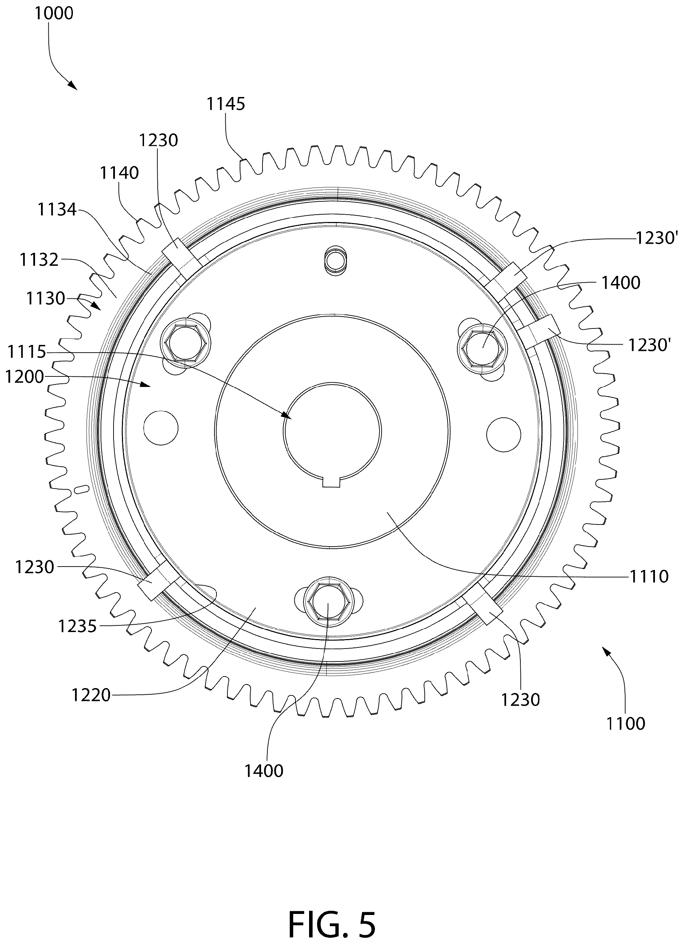

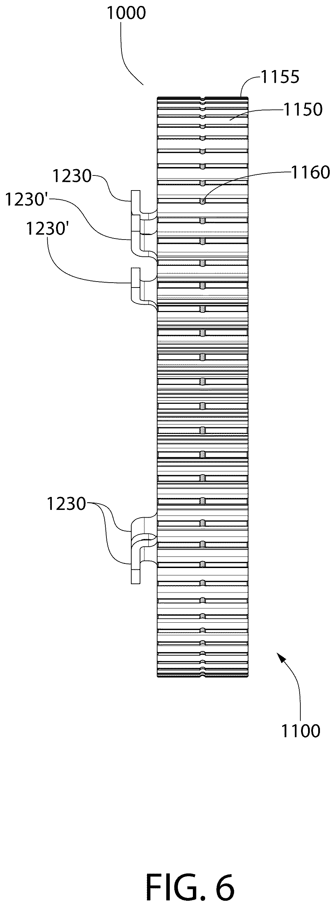

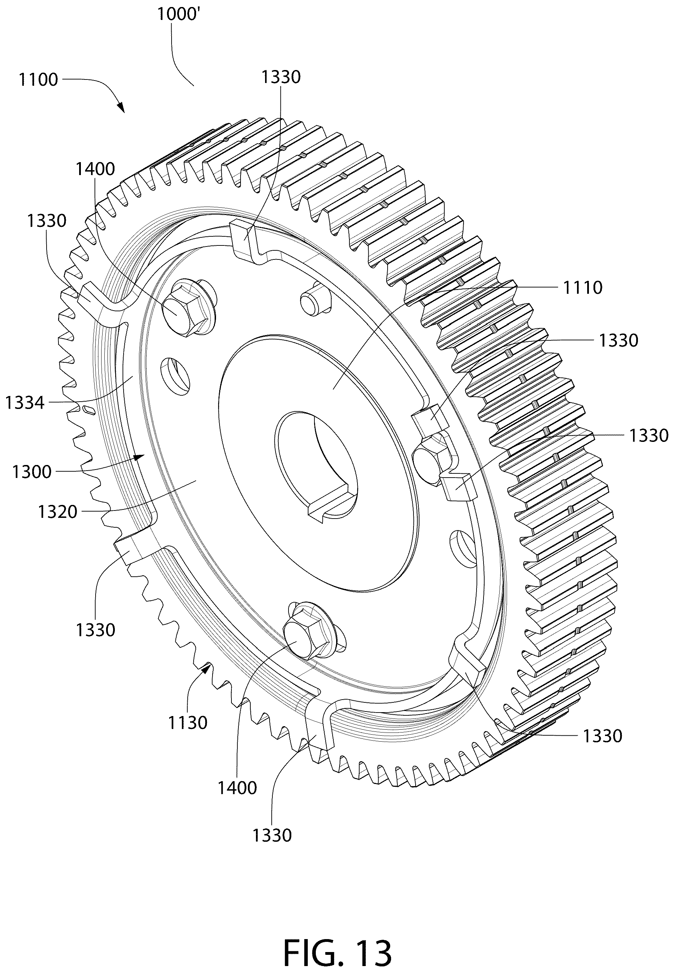

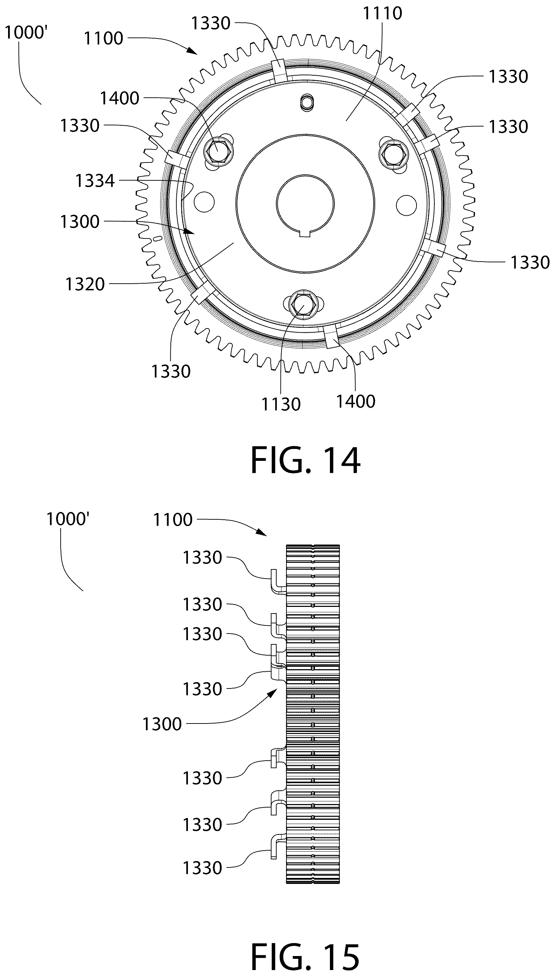

Similarly, the camshaft sensor 590 is configured to emit a signal to the engine control unit that reveals the rotational speed and position of the camshaft. In at least one embodiment, the camshaft sensor 590 is configured to generate a pulsed voltage potential at an electrical contact that is connected to the engine control unit via one or more wires, for example, that corresponds to the rotational speed and position of the camshaft. In at least one such embodiment, the camshaft sensor 590 emits a high voltage potential every time a tooth on the camshaft, or a tooth on a gear mounted to the camshaft, for example, passes by the camshaft sensor 590 that can be detected by the engine control unit via the electrical wire. For faster rotational speeds of the camshaft, the voltage pulses emitted by the camshaft sensor 590 will be faster whereas, for slower rotational speeds of the camshaft, the voltage pulses emitted by the camshaft sensor 590 will be slower. As discussed above, a camshaft timing gear can be mounted to the camshaft of an engine to operably interconnect the camshaft with the crankshaft of the engine. FIGS. 2 and 3 illustrate a gear hub 1100 that can be used to create two different camshaft timing gears - a first camshaft timing gear 1000 illustrated in FIGS. 4-6 and a second camshaft timing gear 1000' illustrated in FIGS. 13-15. The gear hub 1100 comprises an inner hub 1110, an outer rim 1130, and a web 1120 connecting the inner hub 1110 and the outer rim 1130. The inner hub 1110 comprises a through hole 1115 defined therein that is configured to receive an end of the camshaft. The inner hub 1110 further comprises a key slot 1195 defined therein that is configured to receive a key that rotationally locks the gear hub 1100 to the camshaft such that the gear hub 1100 and the camshaft rotate together. The web 1120 is recessed with respect to the inner hub 1110 such that a wall, or lip, 1114 is defined between the inner hub 1110 and the web 1120. Similarly, the web 1120 is recessed with respect to the outer rim 1130 such that a wall, or lip, 1134 is defined between the outer rim 1130 and the web 1120. The web 1120 comprises an array of apertures 1105 defined therein that reduce the weight of the gear hub 1110. The web 1120 further comprises an array of bolt apertures 1125 defined therein that are configured to permit a timing flange to be mounted to the gear hub 1100, as discussed further below.

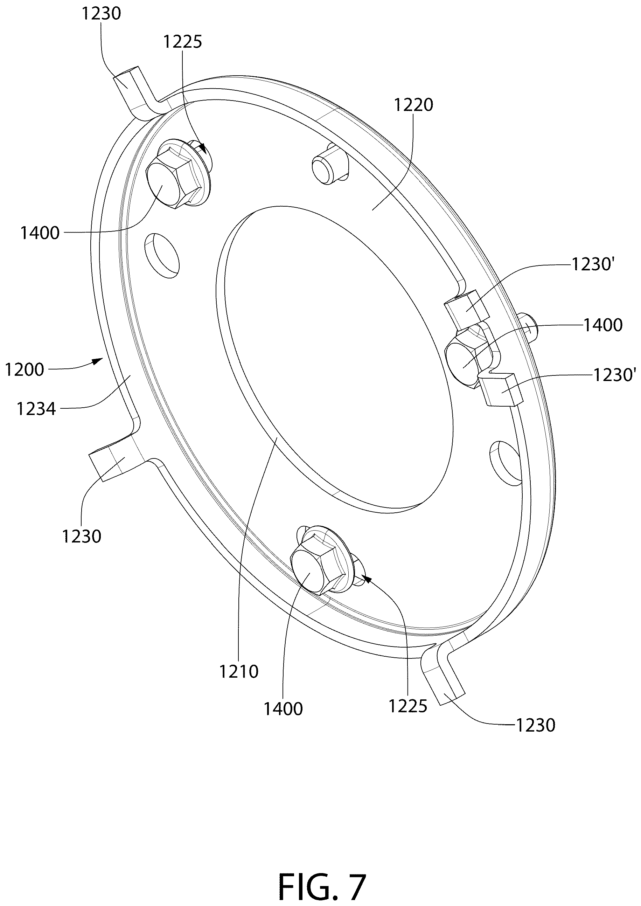

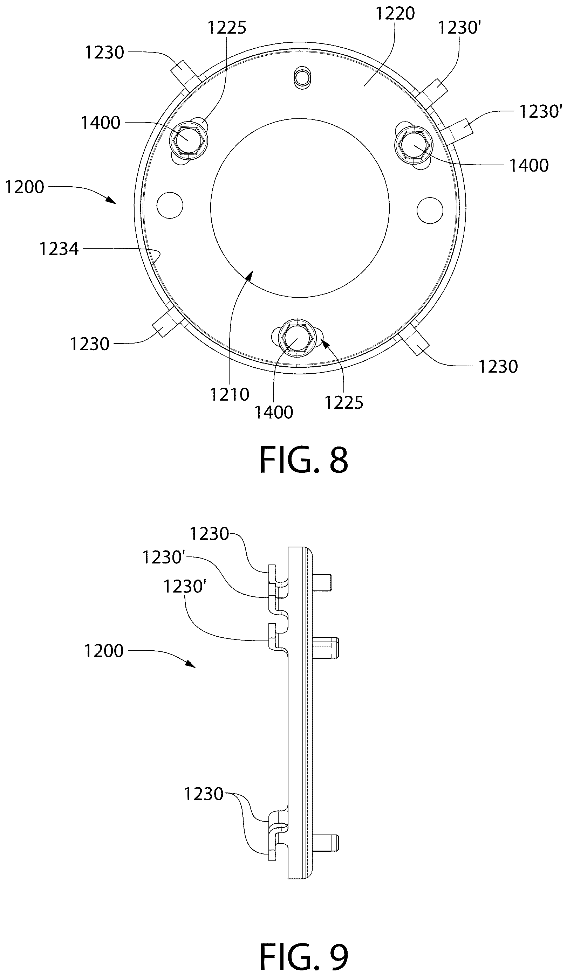

Further to the above, the gear hub 1100 comprises a first lateral side and a second lateral side opposite the first lateral side. Referring to FIGS. 4-6, the camshaft timing gear 1000 comprises the gear hub 1100 and a timing flange 1200 (FIGS. 7-9) mounted to the first side of the gear hub 1100. The timing flange 1200 comprises a web 1220 including an aperture 1210 defined therein that is configured to receive the inner hub 1110 of the gear hub 1100 when the timing flange 1200 is assembled to the gear hub 1100. The web 1220 of the timing flange 1200 comprises circumferential mounting slots 1225 defined therein that are each configured to receive a fastener 1400, such as a bolt, for example, therein that is engageable with the gear hub 1100. The circumferential slots 1225 of the timing flange 1200 are aligned with the bolt apertures 1125 defined in the gear hub 1100 such that the fasteners 1400 extending through the circumferential slots 1225 can threadably engage the bolt apertures 1125 and secure the timing flange 1200 to the gear hub 1100. The timing flange 1200 further comprises an outer wall 1234 that is aligned with and adjacent to the wall 1134 of the gear hub 1100 and, also, an array of sensor teeth extending from the outer wall 1234. The sensor teeth of the timing flange 1200 include an array of three teeth 1230 extending radially outwardly from the outer wall 1234 and over an outer surface 1132 of the gear hub 1130 and, in addition, a set of two closely-positioned teeth 1230' that also extend radially outwardly from the outer wall 1234 and over the outer surface 1132. Further to the above, the teeth 1230 and 1230' are detectable by the camshaft sensor 590 to determine the rotational speed and position of the camshaft timing gear 1000.

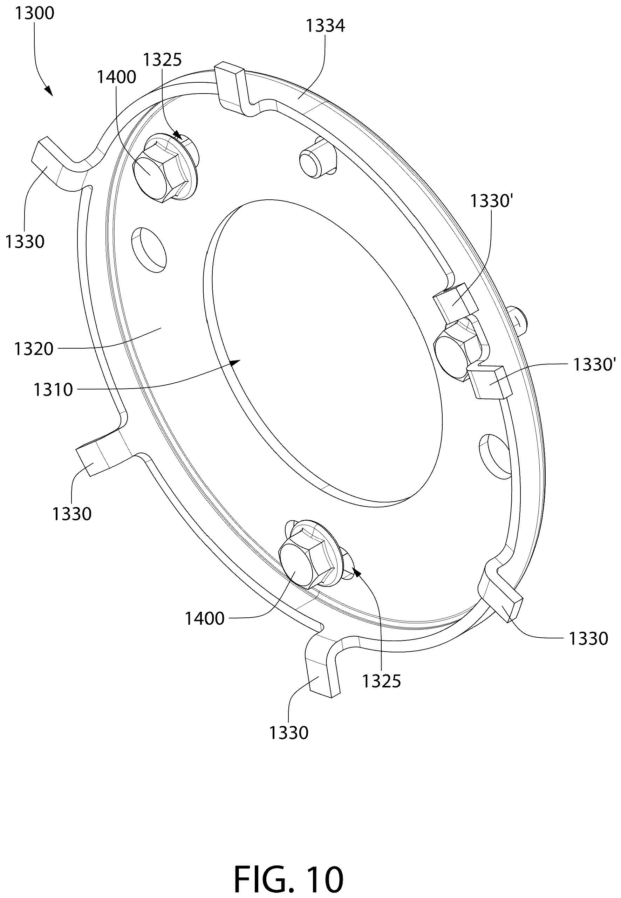

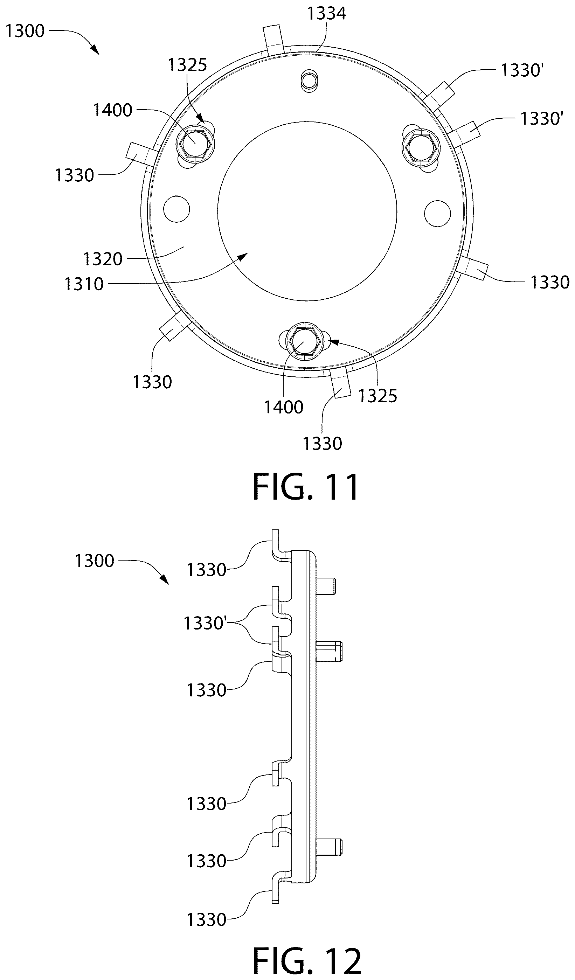

Further to the above, referring to FIGS. 13-15, the camshaft timing gear 1000' comprises the gear hub 1100 and a timing flange 1300 (FIGS. 10-12) mounted to the first side of the gear hub 1100. The timing flange 1300 comprises a web 1320 including an aperture 1310 defined therein that is configured to receive the inner hub 1110 of the gear hub 1100 when the timing flange 1300 is assembled to the gear hub 1100. The web 1320 of the timing flange 1300 comprises circumferential mounting slots 1325 defined therein that are each configured to receive a fastener 1400, such as a bolt, for example, therein that is engageable with the gear hub 1100. The circumferential slots 1325 of the timing flange 1300 are aligned with the bolt apertures 1125 defined in the gear hub 1100 such that the fasteners 1400 extending through the circumferential slots 1325 can threadably engage the bolt apertures 1125 and secure the timing flange 1300 to the gear hub 1100. The timing flange 1300 further comprises an outer wall 1334 that is aligned with and adjacent to the wall 1134 of the gear hub 1100 and, also, an array of sensor teeth extending from the outer wall 1334. The sensor teeth of the timing flange 1300 include an array of five teeth 1330 extending radially outwardly from the outer wall 1334 and over the outer surface 1132 of the gear hub 1130 and, in addition, a set of two closely-positioned teeth 1330' that also extend radially outwardly from the outer wall 1334 and over the outer surface 1132. Further to the above, the teeth 1330 and 1330' are detectable by the camshaft sensor 590 to determine the rotational speed and position of the camshaft timing gear 1000.

As described above, the timing flanges 1200 and 1300 are used interchangeably with the gear hub 1100 to produce two different camshaft timing gears, i.e., camshaft timing gears 1000 and 1000'. The camshaft timing gear 1000 is useable with a first type of engine, such as a four-cylinder engine, for example, and the camshaft timing gear 1000' is useable with a second type of engine, such as a three-cylinder engine, for example. Despite the camshaft timing gears 1000 and 1000' using different timing flanges 1200 and 1300, respectively, the camshaft timing gears 1000 and 1000' both use a gear hub 1100. An engine manufacturer can benefit from this commonality as less specialized components are needed for each type of engine. That said, provided below are advantageous designs that provide additional commonality.

Further to the above, a circumferential array of gear teeth is defined on the outer perimeter 1130 of the gear hub 1100 such that the teeth extend between the first and second sides of the gear hub 1100. In various embodiments, each tooth has a constant tooth height extending from one lateral side of the tooth to the other lateral side. Moreover, each tooth has a constant gear radius extending between the lateral sides of the tooth. In some embodiments, however, the outer rim 1130 comprises a first gear portion 1140 on the first lateral side and a second gear portion 1150 on the second lateral side. In such embodiments, the first gear portion 1140 and the second gear portion 1150 are adjacent to one another and are positioned between the lateral sides 1132 of the outer rim 1130. The first gear portion 1140 comprises a first array of teeth 1145 extending around the perimeter thereof and, similarly, the second gear portion 1150 comprises a second array of teeth 1155 extending around the perimeter thereof. The number of first teeth 1145 and second teeth 1155 are equal and the first teeth 1145 are rotationally aligned with the second teeth 1155 such that the teeth 1145, 1155 form ridges extending between the lateral sides 1132 of the outer rim 1130. The first teeth 1145 define a first gear perimeter and the second teeth 1155 define a second gear perimeter that is larger than the first gear perimeter. Similarly, the first teeth 1145 define a first gear radius and the second teeth 1155 define a second gear radius that is larger than the first gear radius. Owing to the different gear perimeters, and gear radii, of the first and second gear portions 1140, 1150, a step 1160 is defined between the first teeth 1145 of the first gear portion 1140 and the second teeth 1155 of the second gear portion 1150. In effect, the gear hub 1100 comprises two gears in one component. In various embodiments, this arrangement allows the gear hub 1100 to be used to create two different camshaft timing gears for two different engine types. In such embodiments, the crankshaft of a first type of engine, i.e., the engine using the timing gear 1000, can be operably engaged with the first gear portion 1140 of the gear hub 1100 while the crankshaft of a second type of engine, i.e., the engine using the timing gear 1000', can be operably engaged with the second gear portion 1150 of the gear hub 1100. In this way, the camshaft timing gear 1000 can provide a first timing arrangement between the crankshaft and the camshaft of the first engine type and the camshaft timing gear 1000' can provide a second timing arrangement between the crankshaft and the camshaft of the second engine type.

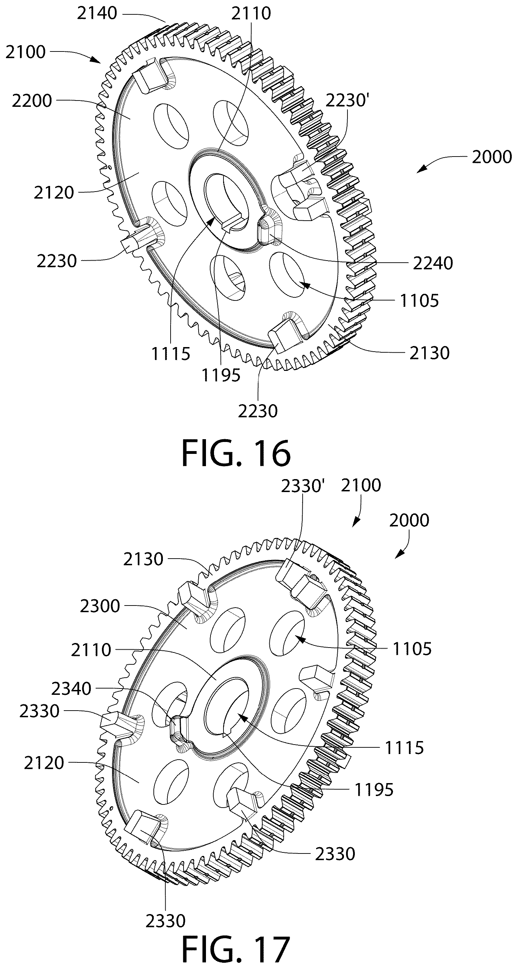

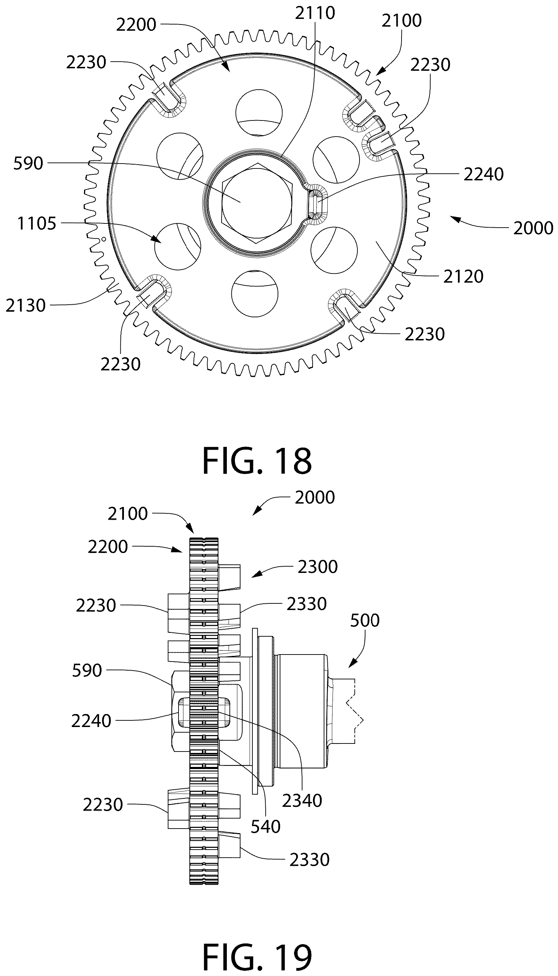

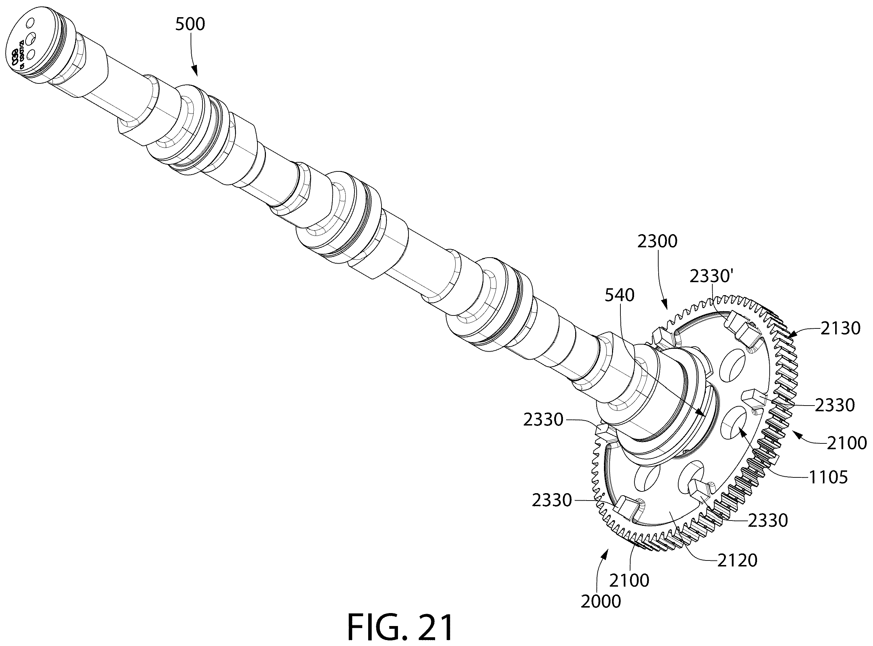

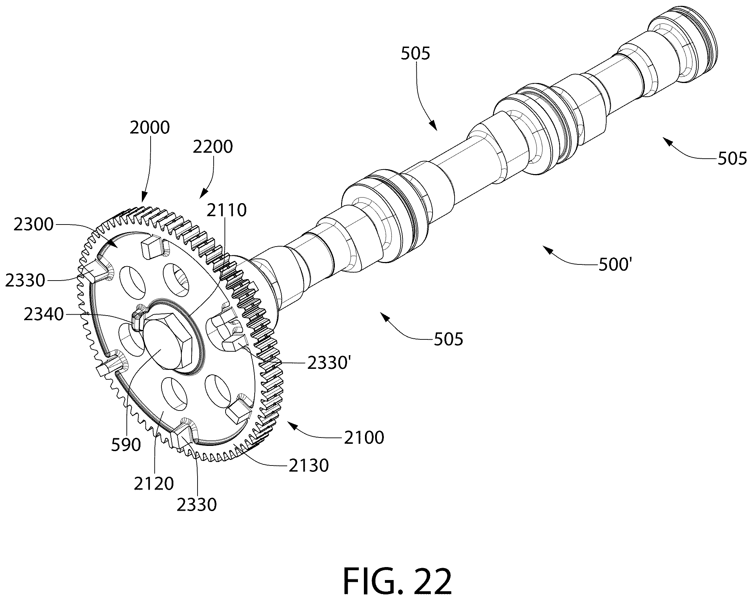

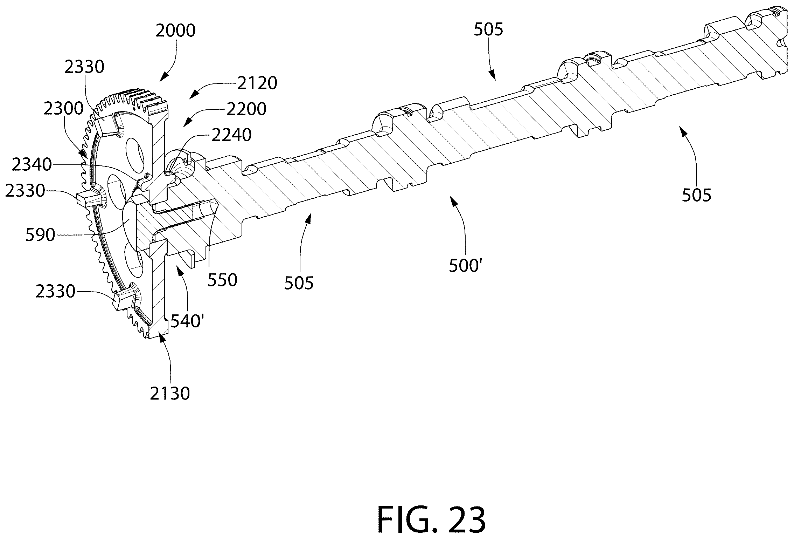

Further to the above, a camshaft timing gear 2000 is illustrated in FIGS. 16 and 17 that can be used with the camshafts of two different engine types. More specifically, the camshaft timing gear 2000 is attachable to a first camshaft 500 of a first engine type, as illustrated in FIGS. 18-21, and to a second camshaft 500' of a second engine type, as illustrated in FIGS. 22 and 23. For instance, the first engine type can be a four-cylinder engine and the second engine type can be a three-cylinder engine.

The camshaft timing gear 2000 comprises a gear hub 2100 including a first lateral side 2200 and a second lateral side 2300. The gear hub 2100 comprises a central hub 2110, an outer rim 2130, and a web 2120 connecting the central hub 2110 and the outer rim 2130. Similar to the central hub 1110, the central hub 2110 comprises a through hole 1115 defined therein configured to receive the end of a camshaft and a key slot 1195 configured to receive a key to rotationally lock the camshaft timing gear 2000 to the camshaft. The outer rim 2130 comprises a circumferential array of gear teeth 2140 defined thereon such that the teeth 2140 extend between the first and second lateral sides of the camshaft timing gear 2000. That said, alternative embodiments are envisioned comprising the first and second gear portions 1140, 1150 described above.

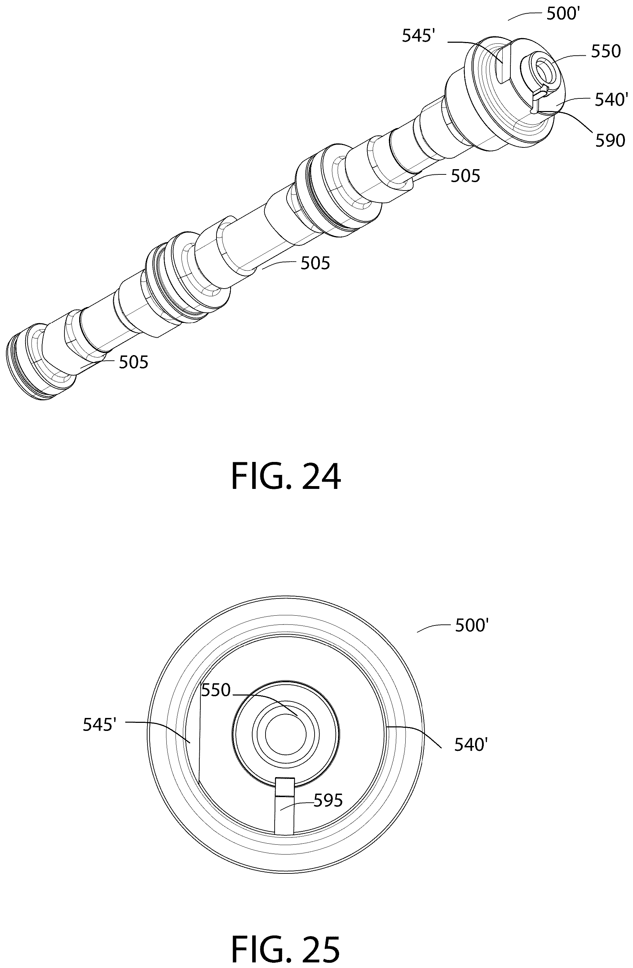

The camshaft timing gear 2000 is attachable to the first camshaft 500 with the first lateral side 2200 facing outwardly away from the first camshaft 500 and to the second camshaft 500' with the second lateral side 2300 facing outwardly away from the second camshaft 500'. When the camshaft timing gear 2000 is attached to the first camshaft 500, the second lateral side 2300 of the camshaft timing gear 2000 abuts an end 540 of the first camshaft 500. Correspondingly, the first lateral side 2200 of the camshaft timing gear 2000 abuts an end 540' of the second camshaft 500' when the camshaft timing gear 2000 is attached to the second camshaft 500'. As illustrated in FIGS. 23-25, the camshaft timing gear 2000 is mounted to the camshaft 500' via a fastener 590, such as a bolt, for example, that is threadably engaged with a threaded aperture 550 defined in the end 540' of the camshaft 500'. The fastener 590 is tightened such that the first lateral side 2200 abuts the end 540' and there is no relative movement between the camshaft timing gear 2000 and the camshaft 500'. The camshaft 500 also has a threaded aperture 550 defined therein and, similar to the above, a fastener 590 is threadably engaged with the aperture 550 in the camshaft 500 to hold the second lateral side 2300 of the camshaft timing gear 2000 against the end 540 of the camshaft 500 when the camshaft timing gear 2000 is attached to the camshaft 500. A similar arrangement can also be used to mount the camshaft timing gears 1000 and 1000' to a camshaft. Further to the above, the second side 2300 of the camshaft timing gear 2000 comprises an indexing key 2340 that extends laterally from, and is integrally formed with, the web 2120 of the gear hub 2100. The indexing key 2340 is configured to extend into an indexing slot defined in the end 540 of the first camshaft 500 when the camshaft timing gear 2000 is assembled to the first camshaft 500, i.e., with the first side 2200 of the camshaft timing gear 2000 facing away from the first camshaft 500 as described above. Similarly, the first side 2200 of the camshaft timing gear 2000 comprises an indexing key 2240 that extends laterally from, and is integrally formed with, the web 2120 of the gear hub 2100. Referring primarily to FIGS. 24 and 25, the indexing key 2240 is configured to extend into an indexing slot 545' defined in the end 540' of the second camshaft 500' when the camshaft timing gear 2000 is assembled to the second camshaft 500', i.e., with the second side 2300 of the camshaft timing gear 2000 facing away from the second camshaft 500' as described above. In combination with the key slot 1195, described above, the indexing keys 2240, 2340 of the camshaft timing gear 2000 and the indexing slots defined in the ends 540, 540' of the camshafts 500, 500' prevent the camshaft timing gear 2000 from being assembled to the camshafts 500, 500' in the wrong orientation. Stated another way, these features prevent the camshaft timing gear 2000 from being fully mounted to the camshaft 500 with the second side 2300 facing outwardly away from the camshaft 500 and, also, prevent the camshaft timing gear 2000 from being fully mounted to the camshaft 500' with the first side 2200 facing outwardly away from the camshaft 500'. More specifically, if the camshaft timing gear 2000 were slid onto the end 540' of the second camshaft 500' in the wrong orientation, the key slot 1195 in the camshaft timing gear 2000 would not be aligned with the key slot 595 defined in the end 540' and the key needed to rotationally lock the camshaft timing gear 2000 to the second camshaft 500', such as a pin, for example, could not be fully inserted therein. The end 540 of the first camshaft 500 also comprises the key slot 595 defined therein which would also not be aligned with the key slot 1195 defined in the camshaft timing gear 2000 if the camshaft timing gear 2000 were slid over the end 540 of the first camshaft 500 with the second side 2300 facing outwardly away from the first camshaft 500 and, as a result, would also prevent a key from rotationally locking the camshaft timing gear 2000 to first camshaft 500. Such an arrangement can be referred to as a poke-a-yoke arrangement. Further to the above, the first lateral side 2200 of the gear hub 2100 comprises three integral sensor teeth 2230 extending laterally from the web 2120 and, also, a pair of integral sensor teeth 2230' extending laterally from the web 2120. Further to the above, the teeth 2230 and 2230' are detectable by the camshaft sensor 590 to determine the rotational speed and position of the camshaft 500. In addition, the second lateral side 2300 of the gear hub 2100 comprises five integral sensor teeth 2330 and a pair of integral sensor teeth 2330' extending laterally from the web 2120 in the opposite direction. Also further to the above, the teeth 2330 and 2330' are detectable by the camshaft sensor 590 to determine the rotational speed and position of the camshaft 500'. Moreover, the camshaft sensor 590 is positioned and arranged such that the camshaft sensor 590 does not detect the teeth 2330 and 2330' when the camshaft timing gear 2000 is mounted to the camshaft 500. Likewise, the camshaft sensor 590 does not detect the teeth 2230 and 2230' when the camshaft timing gear 2000 is mounted to the camshaft 500'. As a result of the above, the camshaft timing gear 2000 will be assembled to the appropriate camshaft in the proper orientation with the correct phase sensor teeth facing the camshaft sensor 590.

As described above, the camshaft timing gear 2000 is useable with a first type of engine, such as a four-cylinder engine, for example, and a second type of engine, such as a three-cylinder engine, for example, but in different, or reverse, orientations of the camshaft timing gear 2000. An engine manufacturer can benefit from this commonality as less specialized components are needed for each type of engine.

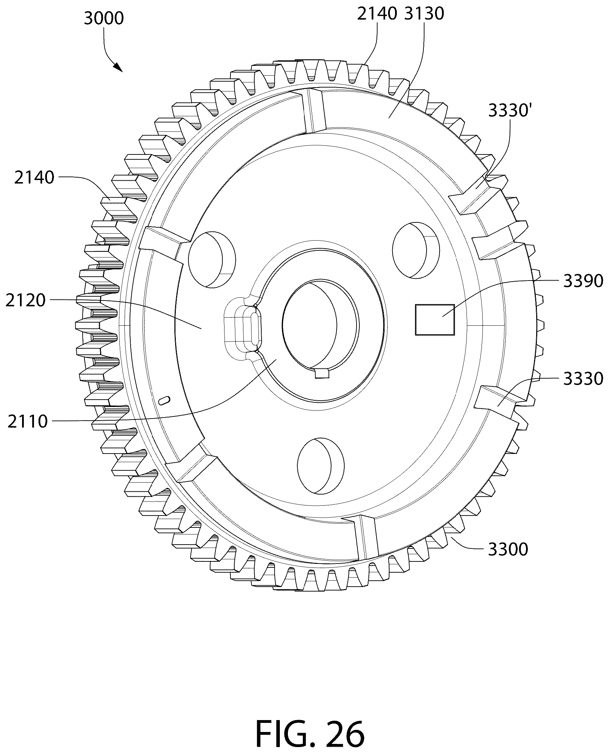

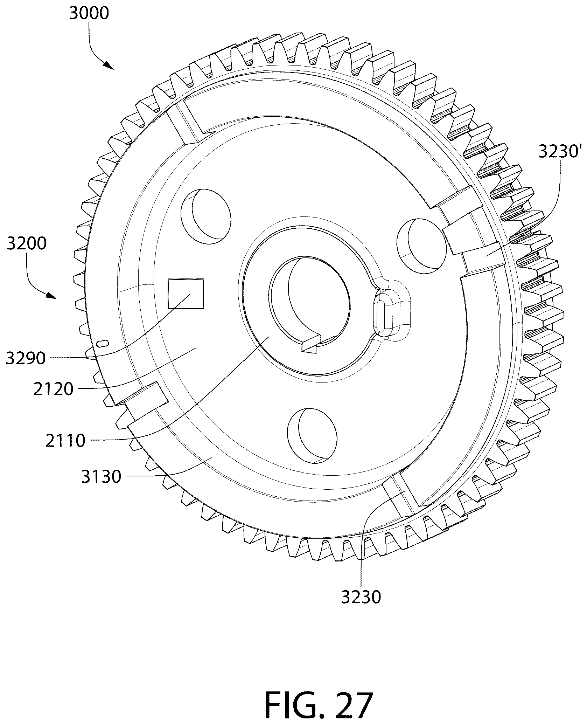

A camshaft timing gear 3000 is illustrated in FIGS. 26 and 27 and is similar to the camshaft timing gear 2000 in many respects. For instance, the camshaft timing gear 3000 comprises a central hub 2110 and a web 2120. The camshaft timing gear 3000 further comprises an outer rim 3130, a first lateral side 3200, and a second lateral side 3300. The first lateral side 3200 is similar to the first lateral side 2200 of the camshaft timing gear 2000 but, instead of having phase sensor teeth 2230 and 2230' extending laterally from the web 2120, the outer rim 3130 comprises negative teeth 3230 and a pair of negative teeth 3230' defined therein. The arrangement of the negative teeth 3230 and 3230' around the outer rim 3130 matches the arrangement of the teeth 2230 and 2230' but can comprise any suitable arrangement. Moreover, the second lateral side 3300 is similar to the second lateral side 2300 of the camshaft timing gear 2000 but, instead of having phase sensor teeth 2330 and 2330' extending laterally from the web 2120, the outer rim 3130 comprises negative teeth 3330 and a pair of negative teeth 3330' defined therein. The arrangement of the negative teeth 3330 and 3330' around the outer rim 3130 matches the arrangement of the teeth 2330 and 2330' but can comprise any suitable arrangement. In various instances, the camshaft timing gear 3000 can be lighter than the camshaft timing gear 2000 owing to the negative teeth 3230, 3230', 3330 and 3330' instead of the positive teeth 2230, 2230', 2330, and 2330'.

Further to the above, the first lateral side 3200 of the camshaft timing gear 3000 comprises a label 3290 that indicates the correct direction in which to assemble the camshaft timing gear 3000 to a camshaft. Similarly, the second lateral side 3300 comprises a label 3390 that indicates the correct direction in which to assemble the camshaft timing gear 3000 to a different camshaft. In various embodiments, the labels 3290 and 3390 are integrally cast into the web 2120 of the camshaft timing gear 3000. In other embodiments, the labels 3290 and 3390 are printed on the web 2120 with ink, for example.

The entire disclosures of U.S. Patent No. 5,333,575, entitled INTERNAL COMBUSTION ENGINE USING LUBRICATING OIL FOR EFFECTIVE AND UNIFORM COOLING, which issued on August 2, 1994, U.S. Patent No. 5,323,750, entitled INTEGRAL ENGINE VALVE COVER AND FUEL PUMP, which issued on June 28, 1994, U.S. Patent No. 5,235,942, entitled CYLINDER HEAD ASSEMBLY, which issued on August 17, 1993, U.S. Patent No. 5,524,507, entitled CONNECTING ROD, which issued on June 11, 1996, and U.S. Patent No. 5,823,156, entitled DUAL BORE INTAKE MANIFOLD, which issued on October 20, 1998, are incorporated by reference herein.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

## Claims

1. An engine, comprising:
an engine block;
a crankshaft rotatably supported by the engine block;
a crankshaft timing gear mounted to the crankshaft such that the crankshaft timing gear rotates with the crankshaft;
a rotatable camshaft comprising cam lobes and a camshaft end, wherein the camshaft end comprises an indexing slot; and
a camshaft timing gear mountable to the camshaft end such that the camshaft timing gear is rotationally affixed to the camshaft and rotates with the camshaft, wherein the camshaft timing gear is driveable by the crankshaft timing gear when the camshaft timing gear is rotationally affixed to the camshaft, and wherein the camshaft timing gear comprises:
a first lateral side;
a second lateral side opposite the first lateral side;
a first indexing pad on the first lateral side that prevents said camshaft timing gear from being rotationally affixed to the camshaft with the second lateral side facing outwardly away from the cam lobes; and
a second indexing pad on the second lateral side that is configured to be received within the indexing slot in the camshaft end such that the first lateral side faces outwardly away from the cam lobes and such that the camshaft timing gear can be rotationally affixed to the camshaft.

2. The engine of Claim 1, wherein the camshaft end comprises a camshaft key slot, wherein the camshaft timing gear comprises a gear key slot, wherein the camshaft key slot is aligned with the gear key slot when the camshaft timing gear is assembled to the camshaft with the first lateral side facing outwardly away from the cam lobes such that a key can be simultaneously inserted into camshaft key slot and the gear key slot to rotationally lock the camshaft timing gear to the camshaft, and wherein the camshaft key slot is not aligned with the gear key slot when the camshaft timing gear is assembled to the camshaft with the second lateral side facing outwardly away from the cam lobes such that a key cannot be simultaneously inserted into camshaft key slot and the gear key slot to rotationally lock the camshaft timing gear to the camshaft.

3. The engine of Claim 2, wherein the camshaft end comprises a threaded aperture defined therein, further comprising a bolt that is threadably engaged with the threaded aperture and compresses the camshaft timing gear against the camshaft end.

4. The engine of any one of Claims 1-3, wherein the first lateral side comprises a first array of integral phase sensor teeth, wherein the second lateral side comprises a second array of integral phase sensor teeth, and wherein the second array of integral phase sensor teeth has a different arrangement than the first array of integral phase sensor teeth.

5. The engine of Claim 4, further comprising a camshaft speed sensor configured to detect the first array of integral phase sensor teeth but not the second array of integral phase sensor teeth.

6. The engine of any one of Claims 1-5, wherein the camshaft timing gear further comprises:
a first gear portion adjacent the first lateral side, wherein the first gear portion comprises a first annular array of teeth that define a first gear radius; and
a second gear portion adjacent the second lateral side, wherein the second gear portion comprises a second annular array of teeth defining a second gear radius, and wherein the second gear radius is different than the first gear radius.

7. The engine of Claim 6, further comprising an idler timing gear operably connecting the camshaft timing gear to the crankshaft timing gear, wherein the idler timing gear is operably engaged with the first gear portion but not the second gear portion.

8. The engine of Claim 6 or 7, wherein the camshaft timing gear comprises a step intermediate the first gear portion and the second gear portion.

9. The engine of any one of Claims 6-8, wherein the first annular array of gear teeth and the second annular array of gear teeth have the same number of teeth.

10. The engine of any one of Claims 6-9, wherein the first annular array of gear teeth and the second annular array of gear teeth are rotationally aligned.

11. The engine of any one of Claims 1-3, wherein the first lateral side comprises a first array of negative phase sensor teeth, wherein the second lateral side comprises a second array of negative phase sensor teeth, and wherein the second array of negative phase sensor teeth has a different arrangement than the first array of negative phase sensor teeth.

12. The engine of Claim 11, further comprising a camshaft speed sensor configured to detect the first array of negative phase sensor teeth but not the second array of negative phase sensor teeth.

13. A set of engines, comprising:
a first engine, comprising:
a first engine block comprising a first number of cylinders;
a first crankshaft rotatably supported by the first engine block;
a first crankshaft timing gear mounted to the first crankshaft such that the first crankshaft timing gear rotates with the crankshaft; and
a first rotatable camshaft comprising first cam lobes and a first camshaft end, wherein the first camshaft end comprises a first indexing slot; and
a camshaft timing gear, comprising:
a first lateral side;
a second lateral side opposite the first lateral side;
a first gear portion adjacent the first lateral side, wherein the first gear portion comprises a first annular array of teeth that define a first gear radius;
a second gear portion adjacent the second lateral side, wherein the second gear portion comprises a second annular array of teeth defining a second gear radius, and wherein the second gear radius is different than the first gear radius;
a first indexing pad on the first lateral side; and
a second indexing pad on the second lateral side positioned within the first indexing slot in the first camshaft end such that the first lateral side faces outwardly away from the first cam lobes; and
a second engine, comprising:
a second engine block comprising a second number of cylinders that is different than the first number of cylinders;
a second crankshaft rotatably supported by the second engine block;
a second crankshaft timing gear mounted to the second crankshaft such that the second crankshaft timing gear rotates with the second crankshaft; and
a second rotatable camshaft comprising second cam lobes and a second camshaft end, wherein the second camshaft end comprises a second indexing slot; and
another said camshaft timing gear rotationally locked to the second camshaft, wherein the first indexing pad of the another said camshaft timing gear is positioned within the second indexing slot in the second camshaft end such that the second lateral side faces outwardly away from the second cam lobes.

14. The set of engines of Claim 13, wherein the first number of cylinders is three, and wherein the second number of cylinders is four.

15. The set of engines of Claim 13 or 14, wherein the first camshaft end comprises a first camshaft key slot, wherein the camshaft timing gear of the first engine comprises a gear key slot, wherein the first camshaft key slot is aligned with the gear key slot when the camshaft timing gear of the first engine is assembled to the first camshaft with the first lateral side facing outwardly away from the first cam lobes such that a key can be simultaneously inserted into first camshaft key slot and the gear key slot to rotationally lock the camshaft timing gear of the first engine to the first camshaft, and wherein the first camshaft key slot is not aligned with the gear key slot when the camshaft timing gear of the first engine is assembled to the first camshaft with the second lateral side facing outwardly away from the first cam lobes such that a key cannot be simultaneously inserted into first camshaft key slot and the gear key slot to rotationally lock the camshaft timing gear of the first engine to the first camshaft.

16. The set of engines of Claim 13 or 14, wherein the second camshaft end comprises a second camshaft key slot, wherein the another camshaft timing gear of the second engine comprises a gear key slot, wherein the second camshaft key slot is aligned with the gear key slot when the another camshaft timing gear is assembled to the second camshaft with the second lateral side facing outwardly away from the second cam lobes such that a key can be simultaneously inserted into second camshaft key slot and the gear key slot to rotationally lock the another camshaft timing gear to the second camshaft, and wherein the second camshaft key slot is not aligned with the gear key slot when the another camshaft timing gear is assembled to the second camshaft with the first lateral side facing outwardly away from the second cam lobes such that a key cannot be simultaneously inserted into second camshaft key slot and the gear key slot to rotationally lock the another camshaft timing gear to the second camshaft.

17. The set of engines of any one of Claims 13-16, wherein:
the camshaft timing gear further comprises:
a first gear portion adjacent the first lateral side, wherein the first gear portion comprises a first annular array of teeth that define a first gear radius; and
a second gear portion adjacent the second lateral side, wherein the second gear portion comprises a second annular array of teeth defining a second gear radius, and wherein the second gear radius is different than the first gear radius, and
the first engine further comprises a first idler timing gear operably connecting the camshaft timing gear of the first engine to the first crankshaft timing gear, and wherein the first idler timing gear is operably engaged with the first gear portion but not the second gear portion of camshaft timing gear of the first engine.

18. The set of engines of Claim 17, wherein the second engine further comprises a second idler timing gear operably connecting the another camshaft timing gear to the second crankshaft timing gear, and wherein the second idler timing gear is operably engaged with the second gear portion but not the first gear portion of the another camshaft timing gear.
